(19) Europäisches Patentamt
European Patent Office
Office européen des brevets

(11) Veröffentlichungsnummer : **0 286 021 B1**

(12) # EUROPÄISCHE PATENTSCHRIFT

(45) Veröffentlichungstag der Patentschrift : **26.06.91 Patentblatt 91/26**

(51) Int. Cl.$^5$ : **C09B 62/51**, C09B 62/085, D06P 1/38

(21) Anmeldenummer : **88105253.4**

(22) Anmeldetag : **31.03.88**

(54) **Azoreaktivfarbstoffe.**

(30) Priorität : **07.04.87 DE 3711763**

(43) Veröffentlichungstag der Anmeldung : **12.10.88 Patentblatt 88/41**

(45) Bekanntmachung des Hinweises auf die Patenterteilung : **26.06.91 Patentblatt 91/26**

(84) Benannte Vertragsstaaten : **CH DE FR GB LI**

(56) Entgegenhaltungen :
**EP-A- 0 171 611**
**EP-A- 0 197 418**
**FR-A- 181 585**

(73) Patentinhaber : **BASF Aktiengesellschaft**
**Carl-Bosch-Strasse 38**
**W-6700 Ludwigshafen (DE)**

(72) Erfinder : **Eilingsfeld, Heinz, Dr.**
**Pierstrasse 9a**
**W-6710 Frankenthal (DE)**
Erfinder : **Iden, Ruediger, Dr.**
**Ruhhecke 25a**
**W-6720 Speyer (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 286 021 B1

## Beschreibung

Die vorliegende Erfindung betrifft neue Azoreaktivfarbstoffe, deren Diazokomponente aus der Anilinreihe stammt und einen Reaktivanker auf Basis des Vinylsulfonylsystems aufweist, der in ortho- oder para-Position zur Azobrücke steht, sowie ihre Verwendung zum Färben und Bedrucken von Fasermaterialien.

Aus der DE-A-3 512 340 sind Reaktivfarbstoffe bekannt, die sich von Azofarbstoffen ableiten. Als Diazokomponenten dienen dabei Produkte auf Anilinbasis, die in meta-Stellung zur Aminogruppe einen Reaktivanker des Vinylsulfonylsystems aufweisen.

Es wurden nun neue Azoreaktivfarbstoffe der Formel I

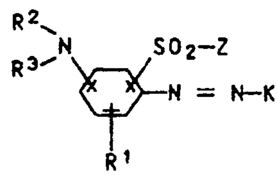

(I),

gefunden, in der

K den Rest einer Kupplungskomponente,

$R^1$ Wasserstoff, $C_1$-$C_4$-Alkyl, $C_1$-$C_4$-Alkoxy, Halogen, Carboxyl, $C_1$-$C_4$-Alkoxycarbonyl, Carbamoyl, $C_1$-$C_4$-Mono- oder Dialkylcarbamoyl oder Hydroxysulfonyl,

Z Vinyl oder den Rest $CH_2$-$CH_2$-$Z^1$, in dem $Z^1$ für $OSO_3H$, $SSO_3H$, $OPO(OH)_2$, Formyloxy, Acetyloxy oder den Rest

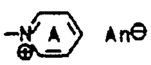

steht, wobei der Ring A gegebenenfalls durch Carboxyl oder Carbamoyl substituiert ist und $An^{\ominus}$ die Bedeutung eines Anions besitzt,

$R^2$ Wasserstoff oder $C_1$-$C_4$-Alkyl, das gegebenenfalls durch Phenyl substituiert ist, und

$R^3$ gegebenenfalls durch Carboxyl substituiertes $C_2$-$C_3$-Alkenylcarbonyl, jeweils durch Halogen, $C_1$-$C_4$-Alkylsulfonyl oder Phenylsulfonyl substituiertes $C_2$-$C_3$-Alkenylcarbonyl oder Propionyl, den Rest CO-$CH_2$-$CH_2$-$Z^1$, wobei $Z^1$ die obengenannte Bedeutung besitzt, oder eine Reaktivankergruppe aus der Reihe der aromatischen Stickstoffheterocyclen, die mindestens einen reaktiven Substituenten aufweisen, bedeuten, mit der Maßgabe, daß der Rest $SO_2$-Z nicht in meta-Position zur Azobrücke steht.

Die den neuen Azoreaktivfarbstoffen zugrunde liegenden Kupplungskomponenten KH sind an sich bekannt und in großer Zahl beschrieben, z.B. in Venkataraman "The Chemistry of Synthetic Dyes" Band 6, Seiten 213 bis 297, Academic Press, New York, London, 1972.

Wichtige Kupplungskomponenten sind solche der Hydroxybenzol-, Hydroxynaphthalin-, Anilin-, Aminonaphthalin- oder Aminohydroxynaphthalinreihe. Weiterhin kommen Heterocyclen aus der Pyrazol-, Pyridin-, Pyrimidin-, Indol- oder Barbitursäurereihe oder auch Kupplungskomponenten der Acetessigarylidreihe in Betracht.

Vorzugsweise weisen die Kupplungskomponenten dabei Sulfon- und/oder Carbonsäuregruppen auf. Für den Fall, daß die Kupplungskomponenten ebenfalls faserreaktive Gruppen aufweisen, handelt es sich dabei insbesondere um den Rest

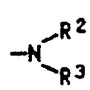

,

in dem $R^2$ und $R^3$ jeweils die obengenannte Bedeutung besitzen.

Kupplungskomponenten der Anilin- oder Naphthalinreihe sind z.B. N-monosubstituierte Aniline, m-Phenylendiaminderivate, Naphtholsulfonsäuren, Aminonaphthaline, Naphthole, Hydroxynaphthoesäurederivate, Aminonaphthalinsulfonsäuren oder Aminonaphtholsulfonsäuren.

Faserreaktivgruppenfreie Kupplungskomponenten KH der Anilin- oder Naphthalinreihe entsprechen beispielsweise den Verbindungen der Formeln Va-Ve

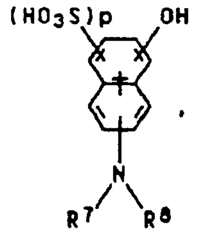, 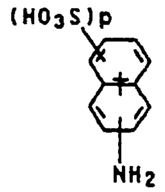, 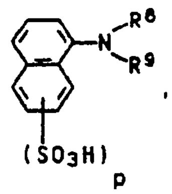, 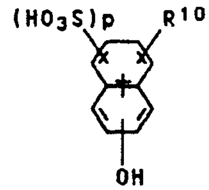, 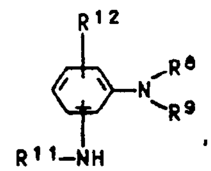,

(Va) (Vb) (Vc) (Vd) (Ve)

in denen

R⁷ für Wasserstoff, $C_1$-$C_4$-Alkyl, Benzoyl, $C_1$-$C_5$-Alkanoyl oder Phenyl, das durch Hydroxysulfonyl substituiert sein kann,

R⁸ für Wasserstoff oder $C_1$-$C_4$-Alkyl, das durch Hydroxy, Carboxyl oder Hydroxysulfonyl substituiert sein kann,

R⁹ für Wasserstoff, $C_1$-$C_4$-Alkyl, das durch Hydroxy, Carboxyl, Hydroxysulfonyl oder Hydroxysulfonyloxy substituiert sein kann, Benzyl oder Phenyl, das durch $C_1$-$C_4$-Alkyl, $C_1$-$C_4$-Alkoxy, Chlor oder Hydroxysulfonyl substituiert sein kann,

R¹⁰ für Wasserstoff, $C_1$-$C_6$-Alkylureido-, Phenylureido, das durch Chlor, Methyl, Methoxy, Nitro, Hydroxysulfonyl oder Carboxyl substituiert sein kann, oder Hydroxy,

R¹¹ für Wasserstoff, Carbamoyl, N-Phenylcarbamoyl, $C_1$-$C_6$-Alkyl, insbesondere $C_1$-$C_4$-Alkyl, das durch Phenyl, $C_1$-$C_4$-Alkoxy, Hydroxy, Phenoxy oder $C_1$-$C_4$-Alkanoyloxy substituiert sein kann, $C_5$-$C_7$-Cycloalkyl oder Phenyl, das durch Hydroxysulfonyl substituiert sein kann,

R¹² für Wasserstoff, Methyl, Ethyl, Methoxy, Ethoxy, Carbamoyl, Chlor, Brom, Acetyl, Amino, Ureido, Methylsulfonylamino, Methylamino, Ethylamino, Dimethylamino oder Diethylamino und

p für eine ganze Zahl zwischen 0 und 2 stehen.

Als Kupplungskomponenten sind weiterhin besonders zu nennen : 1-Amino-8-hydroxynaphthalin-3,6- oder -4,6-disulfonsäure sowie deren durch saure Kupplung erhaltene Arylazokupplungsprodukte der Formel VI

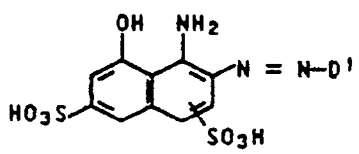 (VI),

in der

D¹ für den Rest einer Diazokomponente der Formel

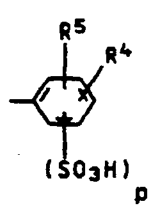 oder 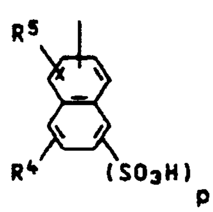

steht, wobei

R⁴ Wasserstoff, Methoxy, Acetyl, Hydroxysulfonyl, Carboxyl, Carbamoyl, Hydroxy, Fluor, Chlor, Brom oder Trifluormethyl,

R⁵ Wasserstoff, Methyl, Methoxy, Ethoxy, Carboxyl, $C_1$-$C_5$-Alkanoyl, Fluor, Chlor, Nitro, Aminosulfonyl, Phenylsulfonyl oder Phenoxy bedeuten und

p die obengenannte Bedeutung besitzt.

Kupplungskomponenten der heterocyclischen Reihe sind beispielsweise Pyrazolone, Aminopyrazole, 2,6-Diaminopyridine, Pyridone, Hydroxy- oder Aminopyrimidine, Indole oder Barbitursäurederivate.

Faserreaktivgruppenfreie Kupplungskomponenten in KH der heterocyclischen Reihe entsprechen dabei beispielsweise den Formeln VIIa-VIIc

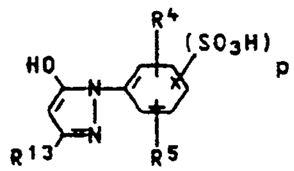 , 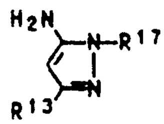 , 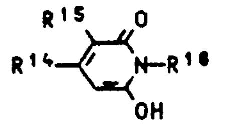 ,

(VIIa) (VIIb) (VIIc)

worin

- $R^{13}$ für Methyl, Methoxycarbonyl oder Phenyl,
- $R^{14}$ für Methyl, Phenyl, Benzoyl, Carboxyl oder Carbamoyl,
- $R^{15}$ für Wasserstoff, Chlor oder Acetylamino, Amino, Hydroxysulfonyl, Carboxyl, Acetyl, Benzoyl oder Carbamoyl,
- $R^{16}$ für Wasserstoff, $C_1$-$C_4$-Alkyl oder durch Carboxyl, Hydroxysulfonyl, Methyl, Methoxy oder Chlor substituiertes Phenyl und
- $R^{17}$ für $C_1$-$C_4$-Alkyl, Cyclohexyl, Benzyl oder durch Fluor, Chlor, Methyl, Methoxy, Nitro, Hydroxysulfonyl, Carboxyl, Methylsulfonyl oder Carbamoyl substituiertes Phenyl stehen und

$R^4$, $R^5$ und p jeweils die obengenannte Bedeutung besitzen.

Faserreaktivgruppenhaltige Kupplungskomponenten KH der Anilin- oder Naphthalinreihe sind beispielsweise Verbindungen der Formel VIIIa oder VIIIb

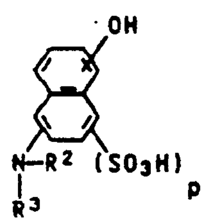 , 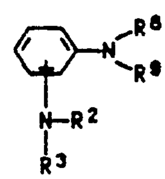 ,

(VIIIa) (VIIIb)

worin $R^2$, $R^3$, $R^8$, $R^9$ und p jeweils die obengenannte Bedeutungen besitzen.

Weiterhin sind besonders zu nennen, die durch saure Kupplung erhaltenen Arylazokupplungsprodukte der 1-Amino-8-hydroxynaphthalin-3,6- oder -4,6-disulfonsäure der Formel IX

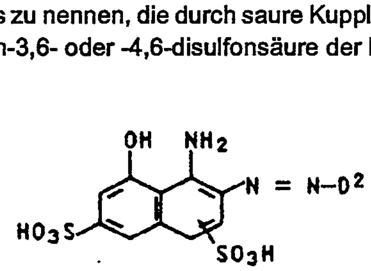 (IX),

in der $D^2$ für einen reaktivgruppenhaltigen Rest einer Diazokomponenten der Formel

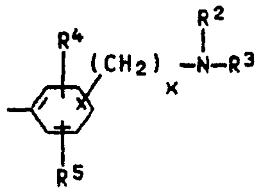

oder

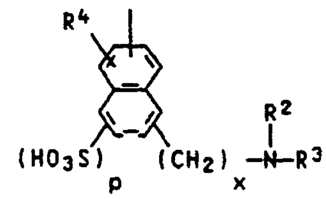

steht, wobei x eine ganze Zahl zwischen 0 und 2 bedeutet und $R^2$, $R^3$, $R^4$, $R^5$ und p jeweils die obengenannte Bedeutung besitzen.

Alle in den obengenannten Resten auftretenden Alkylgruppen können sowohl geradkettig als auch verzweigt sein.

$R^1$, $R^2$, $R^7$, $R^8$, $R^9$, $R^{11}$ und $R^{16}$ bedeuten beispielsweise Methyl, Ethyl, Propyl, Isopropyl, Butyl, Isobutyl, sec-Butyl oder tert-Butyl.

$R^{11}$ bedeutet weiterhin beispielsweise Pentyl, Isopentyl, sec-Pentyl, tert-Pentyl oder Hexyl.

$R^8$ und $R^9$ bedeuten weiterhin beispielsweise 2-Hydroxyethyl, 2-Carboxyethyl, 2-Hydroxysulfonylethyl, 2- oder 3-Hydroxypropyl, 2- oder 3-Carboxypropyl oder 2- oder 3- Hydroxysulfonylpropyl.

$R^9$ bedeutet weiterhin beispielsweise 2-Sulfatoethyl oder 2- oder 3-Sulfatopropyl.

$R^2$ und $R^{11}$ bedeuten weiterhin beispielsweise Benzyl oder 2-Phenylethyl.

$R^{11}$ bedeutet weiterhin beispielsweise 2-Hydroxyethyl, 2- oder 3-Hydroxypropyl, 4-Hydroxybutyl, 2-Methoxyethyl, 2-Ethoxyethyl, 2- oder 3-Methoxypropyl, 2- oder 3-Ethoxypropyl, 2-Phenoxyethyl, 2- oder 3-Phenoxypropyl, 2-Formyloxyethyl, 2-Acetyloxyethyl, 3-Acetyloxypropyl, 4-Acetyloxybutyl, Cyclopentyl, Cyclohexyl oder Cycloheptyl.

$R^1$ bedeutet weiterhin beispielsweise Methoxy, Ethoxy, Propoxy, Isopropoxy, Butoxy, Isobutoxy, sec-Butoxy, Methoxycarbonyl, Ethoxycarbonyl, Propoxycarbonyl, Isopropoxycarbonyl, Butoxycarbonyl, Methylcarbamoyl, Ethyl carbamoyl, Propylcarbamoyl, Isopropylcarbamoyl, Butylcarbamoyl, Dimethylcarbamoyl, Diethylcarbamoyl, Diisopropylcarbamoyl oder Methyl-ethylcarbamoyl.

Z bedeutet beispielsweise Vinyl, 2-Hydroxysulfonylethyl, 2-Sulfatoethyl, 2-Thiosulfatoethyl, 2-Phosphatoethyl, 2-Formyloxyethyl oder 2-Acetyloxyethyl.

Wenn $Z^1$ für den Rest

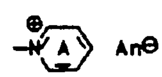

steht, bedeutet $An^{\ominus}$ ein Anion, z.B. Chlorid, Bromid, Sulfat oder Phosphat. Wenn der Ring A dabei durch Carboxyl substituiert ist, ist kein externes Anion $An^{\ominus}$ erforderlich, da sich eine Betainstruktur ausbildet.

Z bedeutet weiterhin beispielsweise 2-Pyridiniumethyl (als Chlorid), 2-(3-Carboxypyridinium)ethyl oder 2-(3-Carbamoylpyridinium)ethyl (als Chlorid).

$R^9$ bedeutet weiterhin beispielsweise 4-Methylbenzyl, 2-Chlorbenzyl, 2-Methoxybenzyl, 4-Hydroxysulfonylbenzyl, 2-Methylphenyl, 2-Ethylphenyl, 2,4-Dimethylphenyl, 2- oder 3-Chlorphenyl, 4-Ethoxyphenyl oder 3-Hydroxysulfonylphenyl.

$R^{10}$ bedeutet beispielsweise Methylureido, Ethylureido, Propylureido, Isopropylureido, Butylureido, Isobutylureido, Pentylureido, Hexylureido, Phenylureido, 2-Chlorphenylureido, 4-Methylphenylureido oder 3-Hydroxysulfonylureido.

$R^5$ und $R^7$ bedeuten weiterhin beispielsweise Formyl, Acetyl, Propionyl, Butyryl, Isobutyryl oder Pentanoyl.

$R^{16}$ und $R^{17}$ bedeuten weiterhin beispielsweise 2- oder 3-Carboxyphenyl, 4-Hydroxysulfonylphenyl, 2-Methylphenyl, 2,4-Dimethylphenyl, 4-Methoxyphenyl, 2-Chlorphenyl oder 2,4-Dichlorphenyl.

$R^{17}$ bedeutet weiterhin beispielsweise 2- oder 4-Fluorphenyl, 3-Nitrophenyl, 4-Methylsulfonylphenyl oder 4-Carbamoylphenyl.

Geeignete Reaktivgruppen $R^3$, d. h. Gruppen, die mit den Hydroxyl- oder Iminogruppen der Faser unter Färbebedingungen unter Ausbildung kovalenter Bindungen reagieren, sind solche, die mindestens einen reaktiven Substituenten an einem 5- oder 6-gliedrigen aromatischen Stickstoffheterocyclus enthalten. Solche Stickstoffheterocyclen, die außer Stickstoff auch andere Heteroatome, z.B. Sauerstoff oder Schwefel, im Ring aufweisen können, sind beispielsweise Azine, Diazine oder Triazine, wie Pyridine, Pyrimidine, Pyridazine, Pyrazine, Thiazine, Oxazine oder asymmetrische oder symmetrische Triazine, oder auch Ringsysteme, die einen oder mehrere ankondensierte aromatische Carbocyclen aufweisen, wie Chinoline, Phthalazine, Chinazoline, Chinoxaline, Acridine, Phenazine oder Phenantridine.

Als reaktive Substituenten am Heterocyclus sind beispielsweise Halogen, insbesondere Fluor, Chlor oder Brom, Ammonium, Hydrazinium, gegebenenfalls durch Carboxyl oder Carbamoyl substituiertes Pyridinium, Sulfonium, Sulfonyl, Azido, Rhodanido, Thio, Sulfino oder Sulfono zu nennen.

Im einzelnen sind beispielsweise zu nennen : 2,4-Dichlortriazin-6-yl, 2,4-Difluortriazin-6-yl, Monohalogen-sym-triazinylreste, insbesondere Monochlor- oder Monofluortriazinylreste, die durch $C_1$-$C_4$-Alkyl, Phenyl, Naphthyl, Amino, $C_1$-$C_4$-Mono- oder Dialkylamino, Phenylamino, Naphthylamino, $C_1$-$C_4$-Alkoxy, Phenoxy, Naphthyloxy, $C_1$-$C_4$-Alkylthio, Phenylthio oder Naphthylthio substituiert sind, wobei die in diesen Resten auftretenden $C_1$-$C_4$-Alkyl-, Phenyl- oder Naphthylgruppen gegebenenfalls substituiert sind. Geeignete Substituenten für $C_1$-$C_4$-Alkyl sind z.B. Hydroxy, Cyano, $C_1$-$C_4$-Alkoxy, Phenyl, Carboxyl, Hydroxysulfonyl oder Sulfato, während für Phenyl oder Naphthyl die Substituenten Hydroxysulfonyl, $C_1$-$C_4$-Alkyl, $C_1$-$C_4$-Alkoxy, Carboxyl, Fluor, Chlor, Brom oder $C_1$-$C_4$-Acylamino in Betracht kommen.

Beispielhaft seien folgende Reste genannt : 2-Amino-4-fluortriazin-6-yl, 2-Methylamino-4-fluortriazin-6-yl, 2-Ethylamino-4-fluortriazin-6-yl, 2-Isopropylamino-4-fluortriazin-6-yl, 2-Dimethylamino-4-fluortriazin-6-yl, 2-Diethylamino-4-fluortriazin-6-yl, 2-(2-Methoxyethylamino)-4-fluor-triazin-6-yl, 2-(2-Hydroxyethylamino)-4-fluortriazin-6-yl, 2-[Bis(2-hydroxyethyl)amino]-4-fluortriazin-6-yl, 2-[N-(2-Hydroxysulfonyl)-N-methylamino]-4-fluortriazin-6-yl, 2-Carboxymethylamino-4-fluortriazin-6-yl, 2-(2-Hydroxysulfonylethylamino)-4-fluortriazin-6-yl, 2-(2-Cyanethylamino)-4-fluortriazin-6-yl, 2-Benzoylamino-4-fluortriazin-6-yl, 2-(2-Phenylethylamino)-4-fluortriazin-6-yl, 2-(N-Benzyl-N-methylamino)-4-fluortriazin-6-yl, 2-(3-Hydroxysulfonylbenzylamino)-4-fluortriazin-6-yl, 2-Cyclohexylamino-4-fluortriazin-6-yl, 2-(o-, m- oder p-Methylphenylamino)-4-fluortriazin-6-yl, 2-(o-, m- oder p-Hydroxysulfonylphenylamino)-4-fluortriazin-6-yl, 2-(2,5-Dihydroxy-sulfonylphenylamino)-4-fluortriazin-6-yl, 2-(o-, m- oder p-Chlorphenylamino)-4-fluortriazin-6-yl, 2-(o-, m- oder p-Methoxyphenyl)-4-fluortriazin-6-yl, 2-(2-Methyl-4- hydroxysulfonyl-phenylamino)-4-fluortriazin-6-yl, 2-(2-Methyl-5-hydroxysulfonylphenyl-amino)-4-fluortriazin-6-yl, 2-(2-Chlor-4-hydroxysulfonylphenylamino)-4-fluortriazin-6-yl, 2-(2-Chlor-5-hydroxysulfonylphenylamino)-4-fluor-triazin-6-yl, 2-(2-Methoxy-4-hydroxysulfonylphenylamino)-4-fluortriazin-6-yl, 2-(o-, m- oder p-Carboxyphenylamino)-4-fluortriazin-6-yl, 2-(2,4-Di-hydroxysulfonylphenylamino)-4-fluortriazin-6-yl, 2-(3,5-Dihydroxysulfonyl-phenylamino)-4-fluortriazin-6-yl, 2-(2-Carboxy-4-hydroxysulfonylphenyl-amino)-4-fluortriazin-6-yl, 2-(2-Carboxy-4-hydroxysulfonylphenylamino)-4-fluortriazin-6-yl, 2-(6-Hydroxysulfonylnaphth-2-ylamino)-4-fluortriazin-6-yl, 2-(4,8-Dihydroxysulfonylnaphth-2-ylamino)-4-fluortriazin-6-yl, 2-(6,8-Dihydroxysulfonylnaphth-2-yl-amino)-4-fluortriazin-6-yl, 2-(N-Methyl-N-phenylamino)-4-fluortriazin-6-yl, 2-(N-Ethyl-N-phenylamino)-4-fluortriazin-6-yl, 2-[N-(2-Hydroxyethyl)-N-phenylamino]-4-fluortriazin-6-yl, 2-(N-Isopropyl-N-phenylamino)-4-fluortriazin-6-yl, 2-Morpholino-4-fluortriazin-6-yl, 2-Piperidino-4-fluortriazin-6-yl, 2-(4,6,8-Trihydroxy-sulfonylnaphth-2-yl)-4-fluortriazin-6-yl, 2-(3,6,8-Trihydroxysulfonyl-naphth-2-yl)-4-fluortriazin-6-yl, 2-(3,6-Dihydroxysulfonylnaphth-1-yl)-4-fluortriazin-6-yl, N-Methyl-N-(2,4-dichlortriazin-6-yl)-carbamoyl, N-Methyl-N-(2-methylamino-4-chlortriazin-6-yl)-carbamoyl, N-Methyl-N-(2-dimethylamino-4-chlortriazin-6-yl)-carbamoyl, N-Methyl- oder N-Ethyl-N-(2,4-dichlortriazin-6-yl)-aminoacetyl, 2-Methoxy-4-fluortriazin-6-yl, 2-Ethoxy-4-fluortriazin-6-yl, 2-Phenoxy-4-fluortriazin-6-yl, 2-(o-, m- oder p-Hydroxysulfonylphenoxy)-4-fluortriazin-6-yl, 2-(o-, m- oder p-Methyl-oder -Methoxy-phenoxy)-4-fluortriazin-6-yl, 2-(2-Hydroxyethyl-mercapto)-4-fluortriazin-6-yl, 2-Phenylmercapto-4-fluortriazin-6-yl, 2-(4-Methylphenylmercapto)-4-fluortriazin-6-yl, 2-(2,4-Dinitrophenyl-mercapto)-4-fluortriazin-6-yl, 2-Methyl-4-fluortriazin-6-yl, 2-Phenyl-4-fluortriazin-6-yl oder die entsprechenden 4-Chlor- oder 4-Brom-Reste oder die durch Austausch der genannten Halogenatome mit tertiären Basen, wie Trimethylamin, Triethylamin, 2-(N,N-Dimethylamino)ethanol, Triethanolamin, N,N-Dimethylhydrazin, Pyridin, α-, ß- oder γ-Picolin, Nicotin- oder Isonicotinsäure, oder Sulfinaten, insbesondere mit Benzolsulfinat erhältlichen Reste.

Weiterhin seien genannt Mono-, Di- oder Trihalogenpyrimidinylreste, wie 2,4-Dichlorpyrimidin-6-yl, 2,3,5-Trichlorpyrimidin-6-yl, 2,4-Dichlor-5-nitro- oder -5-methyl- oder -5-carboxymethyl- oder -5-carboxy- oder -5-cyano- oder -5-vinyl- oder -5-hydroxysulfonyl oder -5-mono-, -di- oder -trichlormethyl- oder -5-carbethoxypyrimidin-6-yl, 2,6-Dichlorpyrimidin-4-ylcarbonyl, 2,4-Dichlorpyrimidin-5-ylcarbonyl, 2-Chlor-4-methyl-pyrimidin-5-ylcarbonyl, 2-Methyl-4-chlorpyrimidin-5-ylcarbonyl, 2-Methylthio-4-fluorpyrimidin-5-ylcarbonyl, 6-Methyl-2,4-dichlorpyrimidin-5-ylcarbonyl-, 2,4,6-Trichlorpyrimidin-5-yl-carbonyl, 2,4-Dichlorpyrimidin-5- ylsulfonyl, 2-Chlorchinoxalin-3-ylcarbonyl, 2- oder 3-Chlorchinoxalin-6-ylcarbonyl, 2- oder 3-Chlorchinoxalin-6-ylsulfonyl, 2,3-Dichlor-chinoxalin-6-ylcarbonyl, 2,3-Dichlorchinoxalin-6-ylsulfonyl, 1,4-Di-chlorphthalazin-6-ylsulfonyl oder -6-ylcarbonyl, 2,4-Dichlorchinazolin-6- oder -7-ylsulfonyl oder -carbonyl, 2- oder 3- oder 4-(4,5-Dichlor-pyridaz-6-on-1-yl)phenylsulfonyl oder -carbonyl, 2-(4,5-Dichlorpyridaz-6-on-1-yl)ethylcarbonyl oder die entsprechenden Monofluorderivate, N-Methyl-N-(2,3-dichlorchinoxalin-6-ylsulfonyl)aminoacetyl, N-Methyl-N-(2,3-dichlorchinoxalin-6-ylcarbonyl)aminoacetyl oder die entsprechenden Brom- oder Fluor-Derivate der oben erwähnten chlorsubstituierten

heterocyclischen Reste. Davon sind beispielsweise 2-Fluorpyrimidin-4-yl, 2,6-Difluorpyrimidin-4-yl, 2,6-Difluor-5-chlorpyrimidin-4-yl, 2-Fluor-5,6-dichlorpyrimidin-4-yl, 2,6-Difluor-5-methylpyrimidin-4-yl, 2-Fluor-5-methyl-6-chlorpyrimidin-4-yl, 2-Fluor-5-nitro-6-chlorpyrimidin-4-yl, 5-Brom-2-fluorpyrimidin-4-yl, 2-Fluor-5-cyanopyrimidin-4-yl, 2-Fluor-5-methylpyrimidin-4-yl, 2,5,6 -Trifluorpyrimidin-4-yl, 5-Chlor-6-chlormethyl-2-fluorpyrimidin-4-yl, 2,6-Difluor-5-brompyrimidin-4-yl, 2-Fluor-5-brom-6-methylpyrimidin-4-yl, 2-Fluor-5-brom-6-chlormethylpyrimidin-4-yl, 2,6-Difluor-5-chlormethylpyrimidin-4-yl, 2,6-Difluor-5-nitropyrimidin-4-yl, 2-Fluor-6-methylpyrimidin-4-yl, 2-Fluor-5-chlor-6-methylpyrimidin-4-yl, 2,6-Difluor-5-nitropyrimidin-4-yl, 2-Fluor-6-methylpyrimidin-4-yl, 2-Fluor-5-chlor-6-methylpyrimidin-4-yl, 2-Fluor-5-chlorpyrimidin-4-yl, 2-Fluor-6-chlorpyrimidin-4-yl, 6-Trifluormethyl-5-chlor-2-fluorpyrimidin-4-yl, 6-Trifluormethyl-2-fluorpyrimidin-4-yl, 2-Fluor-5-nitropyrimidin-4-yl, 2-Fluor-5-trifluormethylpyrimidin-4-yl, 2-Fluor-5-phenylsulfonyl-oder -5-methylsulfonylpyrimidin-4-yl, 2-Fluor-5-carbamoylpyrimidin-4-yl, 2-Fluor-5-carbmethoxypyrimidin-4-yl, 2-Fluor-5-brom-6-trifluormethylpyrimidin-4-yl, 2-Fluor-6-carbamoyl-pyrimidin-4-yl, 2-Fluor-6-carbmethoxypyrimidin-4-yl, 2-Fluor-6-phenyl-pyrimidin-4-yl, 2-Fluor-6-cyanopyrimidin-4-yl, 2-Fluor-4-dichlormethyl-5-chlorpyrimidin-6-yl, 2-Fluor-5-chlorpyrimidin-4-yl, 2-Methyl-4-fluor-5-methylsulfonylpyrimidin-6-yl, 2,6-Difluor-5-methylsulfonylpyrimidin-4-yl, 2-Fluor-5-sulfamoylpyrimidin-4-yl, 2-Fluor-5-chlor-6-carbmethoxypyrimidin-4-yl oder 2,6-Difluor-5-trifluormethylpyrimidin-4-yl zu nennen.

Des weiteren sind sulfonylgruppenhaltige Triazinreste, wie 2,4-Bis(phenylsulfonyl)triazin-6-yl, 2-(3-Carboxyphenylsulfonyl)-4-chlortriazin-6-yl, 2-(3-Hydroxysulfonylphenylsulfonyl)-4-chlortriazin-6-yl oder 2,4-Bis(3-carboxy-phenylsulfonyl)triazin-6-yl, sulfonylgruppenhaltige Pyrimidinringe, wie 2-Carboxymethylsulfonylpyrimidin-4-yl, 2-Methylsulfonyl-6-methyl-pyrimidin-4-yl, 2-Methylsulfonyl-6-ethylpyrimidin-4-yl, 2-Phenylsulfonyl-5-chlor-6-methylpyrimidin-4-yl, 2,6-Bis(methylsulfonyl)pyrimidin-4-yl, 2,6-Bis(methylsulfonyl)-5-chlorpyrimidin-4-yl, 2,4-Bis(methyl sulfonyl)-pyrimidin-5-ylsulfonyl, 2-Methylsulfonylpyrimidin-4-yl, 2-Phenylsulfonyl-pyrimidin-4-yl, 2-Trichlormethylsulfonyl-6-methylpyrimidin-4-yl, 2-Methylsulfonyl-5-chlor-6-methylpyrimidin-4-yl, 2-Methylsulfonyl-5-brom-6-methylpyrimidin-4-yl, 2-Methylsulfonyl-5-chlor-6-methyl-pyrimidin-4-yl, 2-Methylsulfonyl-5-chlor-6-chlormethylpyrimidin-4-yl, 2-Methylsulfonyl-4-chlor-6-methylpyrimidin-5-ylsulfonyl, 2-Methylsulfonyl-5-nitro-6-methylpyrimidin-4-yl, 2,5,6-Tris(methylsulfonyl)pyrimidin-4-yl, 2-Methyl-sulfonyl-5,6-dimethylpyrimidin-4-yl, 2-Ethylsulfonyl-5-chlor-6-methyl-pyrimidin-4-yl, 2-Methylsulfonyl-6-chlorpyrimidin-4-yl, 2,6-Bis(methyl-sulfonyl)-5-chlorpyrimidin-4-yl, 2-Methylsulfonyl-6-carboxypyrimidin-4-yl, 2-Methylsulfonyl-5-hydroxysulfonylpyrimidin-4-yl, 2-Methylsulfonyl-6-carbmethoxypyrimidin-4-yl, 2-Methylsulfonyl-5-carboxypyrimidin-4-yl, 2-Methylsulfonyl-5-cyano-6-methoxypyrimidin-4-yl, 2-Methylsulfonyl-5-chlorpyrimidin-4-yl, 2-(2-Hydroxysulfonylethylsulfonyl)-6-methylpyrimidin-4-yl, 2-Methylsulfonyl-5-brompyrimidin-4-yl, 2-Phenylsulfonyl-5-chlor-pyrimidin-4-yl, 2-Carboxymethylsulfonyl-5-chlor-6-methylpyrimidin-4-yl, 2-Methylsulfonyl-6-chlorpyrimidin-4- oder -5-ylcarbonyl, 2,6-Bis-(methylsulfonyl)pyrimidin-4- oder -5-ylcarbonyl, 2-Ethylsulfonyl-6-chlorpyrimidin-5-ylcarbonyl, 2,4-Bis(methylsulfonyl)pyrimidin-5-ylsulfonyl oder 2-Methylsulfonyl-4-chlor-6-methylpyrimidin-5-ylsulfonyl oder -carbonyl zu nennen.

Weiterhin kommen 2-Chlorbenzthiazol-5- oder -6-ylcarbonyl oder -5- oder -6-ylsulfonyl, 2-Methylsulfonyl- oder 2-Ethylsulfonylbenzthiazol-5- oder -6-ylsulfonyl oder -carbonyl, 2-Phenylsulfonylbenzthiazol-5- oder -6-ylsulfonyl oder -carbonyl oder die entsprechenden, im ankondensierten Benzolring Hydroxysulfonylgruppen enthaltenden, 2-Sulfonylbenzthiazol-5-oder -6-ylcarbonyl oder -sulfonyl-Derivate, 2-Chlorbenzoxazol-5- oder -6-ylcarbonyl oder -sulfonyl, 2-Chlorbenzimidazol-5- oder -6-yl-carbonyl oder -sulfonyl, 2-Chlor-1-methylbenzimidazol-5- oder -6-ylcarbonyl oder -sulfonyl, 2-Chlor-4-methylthiazol-5-ylcarbonyl oder -sulfonyl oder das N-Oxid von 4-Chlor- oder 4-Nitrochinolin-5-ylcarbonyl als beispielhafte Reste in Betracht.

Als Reste $R^3$, die sich von gegebenenfalls durch Carboxyl substituiertem $C_2$-$C_3$-Alkenylcarbonyl, jeweils durch Halogen, insbesondere Chlor oder Brom, $C_1$-$C_4$-Alkylsulfonyl oder Phenylsulfonyl substituiertem $C_2$-$C_3$-Alkenylcarbonyl oder Propionyl oder vom Rest $CO-CH_2-CH_2-Z^1$ ableiten, sind beispielsweise Acryloyl, Mono-, Di- oder Trichloracryloyl, wie $-CO-CH=CH-Cl$ oder $-CO-CCl=CH_2$, 3-Bromacryloyl, $-CO-CCl=CH-CH_3$, $-CO-CCl=CH-COOH$, $-CO-CH=CCl-COOH$, 3-Methylsulfonylacryloyl, 3-Phenylsulfonylacryloyl, 3-Chlorpropionyl, 3-Phenylsulfonylpropionyl oder 3-Methylsulfonylpropionyl zu nennen.

Bevorzugt sind Reaktivfarbstoffe der Formeln II, III und IV

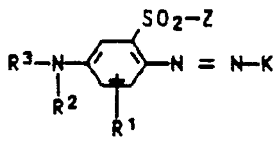
(II)

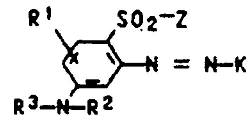
(III)

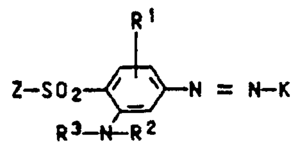
,
(IV)

in denen K, $R^1$, $R^2$, $R^3$ und Z jeweils die obengenannte Bedeutung besitzen.

Besonders bevorzugt sind Azoreaktivfarbstoffe der Formel I, in der $R^2$ Wasserstoff oder $C_1$-$C_4$-Alkyl und $R^3$ Monofluortriazinyl, Monochlortriazinyl oder Dichlortriazinyl, das jeweils durch Phenyl, Naphthyl, Amino, $C_1$-$C_4$-Mono- oder Dialkylamino, Phenylamino oder Naphthylamino, wobei die Phenyl-, Naphthyl- und $C_1$-$C_4$-Alkylgruppen jeweils substituiert sein können, substituiert ist, Difluorpyrimidinyl, Trifluorpyrimidinyl, Trichlorpyrimidinyl, Acryloyl oder 3-Sulfatopropionyl bedeuten.

Insbesondere bevorzugt sind Reaktivfarbstoffe der Formeln II, III und IV, in denen $R^2$ und $R^3$ jeweils die zuletzt genannte Bedeutung besitzen.

Bevorzugte Azoreaktivfarbstoffe weisen beispielsweise folgende Strukturelemente auf der "Diazoseite" auf:

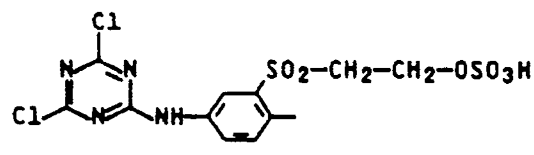
,

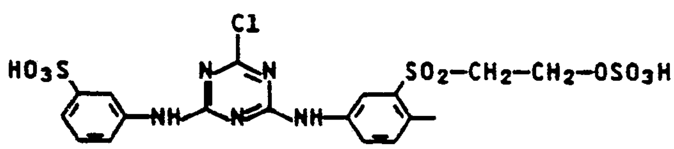
,

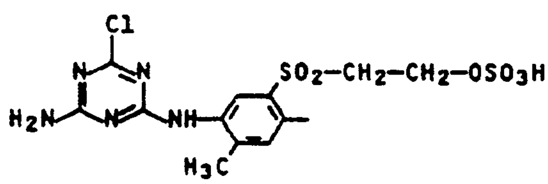
,

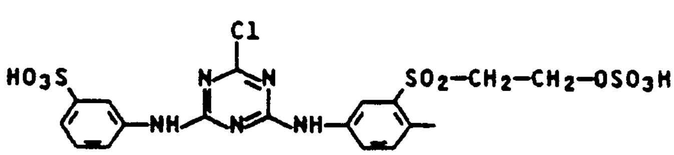
,

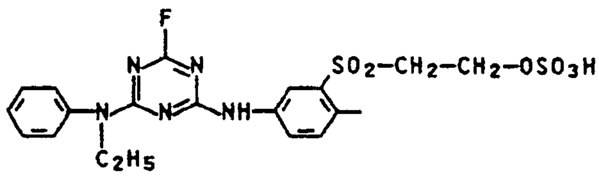
,

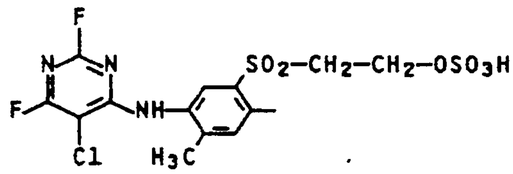
,

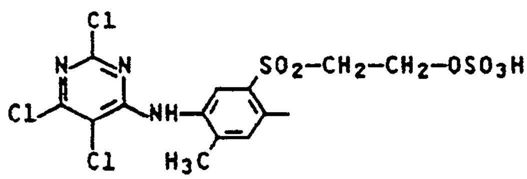
,

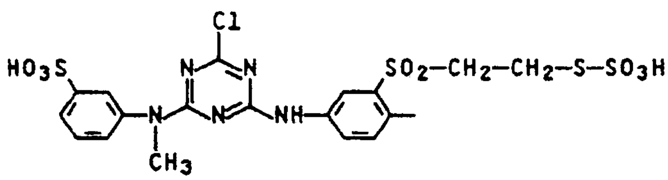
,

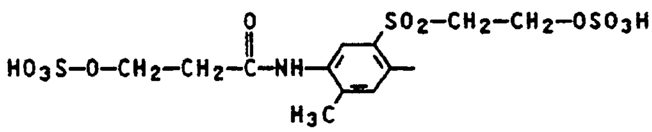
,

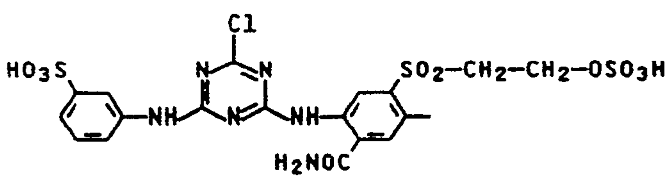
,

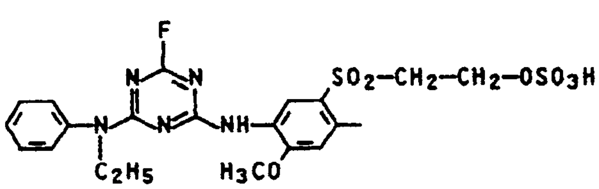
,
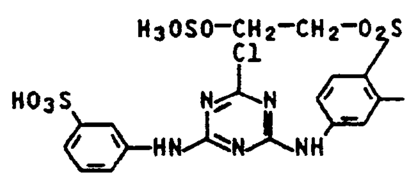

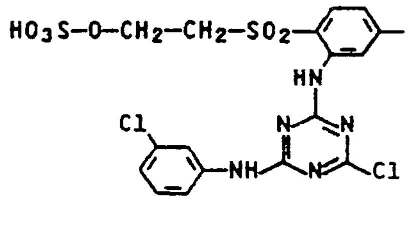 ,

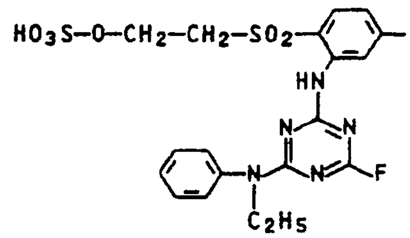 ,

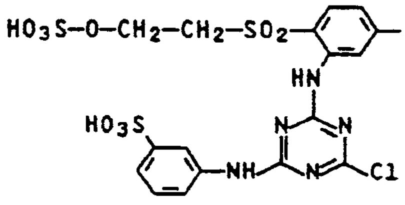 ,

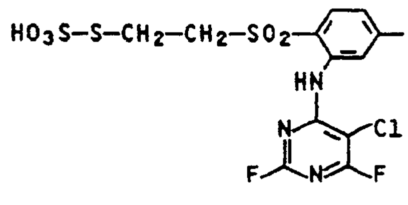 ,

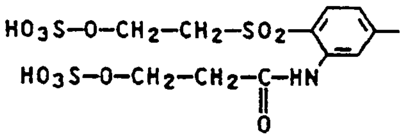

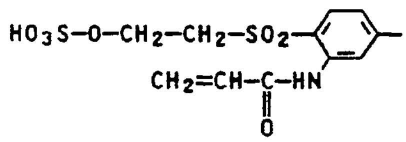

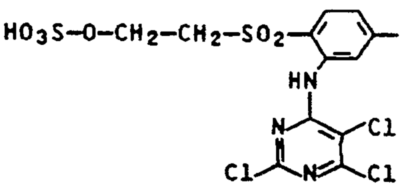

oder

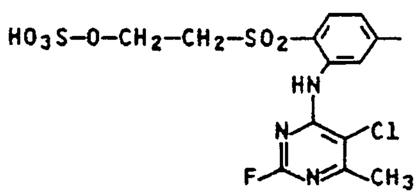

Die Herstellung der Farbstoffe erfolgt durch Diazotierung von Aminen der Formel X oder XI

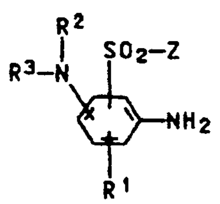

(X)

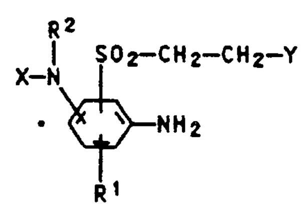

(XI)

in denen $R^1$, $R^2$, $R^3$ und Z jeweils die obengenannte Bedeutung besitzen, Y Chlor oder Hydroxy und X eine sauer oder alkalisch abspaltbare Schutzgruppe, wie Formyl, Acetyl oder 3-Chlorpropionyl, bedeuten, und anschließende Kupplung mit den voranstehend genannten Kupplungskomponenten KH in an sich bekannter Weise.

In den Fällen, in denen Amine der Formel XI als Ausgangsproduckte verwendet werden, erfolgt die Umwandlung des Rests $-CH_2-CH_2-Y$ in Z sowie des Rests X in $R^3$ am Farbstoff. Dies kann z.B. durch Entacylierung und Unsetzung mit Verbindungen der Formel $R^3$-Hal, in denen $R^3$ die obengenannte Bedeutung besitzt und Hal für Halogen, insbesondere Chlor oder Brom steht, und durch Austausch von Y, für den Fall, daß Y Halogen bedeutet, z.B. mit Thiosulfat oder Nicotinsäure oder durch Veresterung der Hydroxylgruppe, für den Fall, daß Y Hydroxy bedeutet, mit geeigneten Veresterungsmitteln wie Phosphor-, Essig-, Chlorsulfon- oder Schwefelsäure, Schwefelsäuremonohydrat oder niedrigprozentigem Oleum geschehen.

Die Herstellung der Aminoverbindugen der Formel X oder XI kann beispiels weise so erfolgen, daß man 2-Acetylamino-4-nitrochlorbenzol mit 2-Mercaptoethanol umsetzt, das entstandene 2-Acetylamino-4-nitrophenyl(2-hydroxyethyl)sulfid zum Sulfon oxidiert und die Nitrogruppe katalytisch reduziert. Das 2-Acetylamino-4-aminophenyl-(2-hydroxyethyl)sulfon kann entweder direkt gekuppelt werden, wobei der Austausch des Acetylrestes gegen eine Reaktivgruppe und die Veresterung des Hydroxyethylsulfons am Farbstoff erfolgt, oder zunächst in eine Verbindung der Formel X über geführt und dann diazotiert und gekuppelt werden.

Die erfindungsgemäßen Reaktivfarbstoffe eignen sich zum Färben oder Bedrucken von Fasermaterialien, wie Wolle, Polyamid, Seide, Leder oder Polyesterfasern, insbesondere aber von cellulosehaltigen Fasermaterialien, wie Leinen, Zellstoff, Regeneratcellulose und vor allem von mercerisierter und nicht mercerisierter Baumwolle. Sie eignen sich sowohl für das Ausziehverfahren als auch für die Foulardfärberei, wonach die Ware mit wäßrigen, gegebenenfalls salzhaltigen Farbstofflösungen oder Präparationen (Pasten) imprägniert wird und die Farbstoffe nach einer Alkalibehandlung oder direkt in Gegenwart von Alkali (z.B. Natriumhydrogencarbonat, Soda oder Natronlauge) in der Wärme fixiert werden.

Die neuen Reaktivfarbstoffe eignen sich besonders zum Färben von Baumwolle nach dem Ausziehverfahren und dem Kaltverweilverfahren, wobei die Differenz zwischen Ausziehgrad und Fixiergrad sehr klein, d.h. der Hydrolyseanteil gering und die Fixierausbeute bemerkenswert hoch ist.

Die Reaktivfarbstoffe der Formel I zeichnen sich weiterhin durch hohe Reaktivität und gutes Fixiervermögen über einen weiten Temperaturbereich aus. So erfordern sie beim Pad-steam-Verfahren nur kurze Dämpfzeiten. Die Farbstoffe sind hervorragend löslich, nicht fixierter Farbstoff ist daher sehr gut auswaschbar, und ergeben Färbungen mit hohem Echtheitsniveau.

Die folgenden Beispiele sollen die Erfindung näher erläutern.

Beispiel 1

60 g 4-(2-Hydroxyethyl)sulfonyl-1,3-diaminobenzol wurden bei 0 bis 5°C innerhalb von 60 Minuten in 100 ml Chlorsulfonsäure eingetragen und anschließend 16 Stunden bei 20 bis 25°C gerührt. Die Reaktionslösung wurde danach auf 400 g Eis gegeben, 20 g Kaliumchlorid zugesetzt und noch eine Stunde bei 0 bis 5°C nachgerührt. Nach dem Absaugen wurde zuerst mit etwa 100 ml Eiswasser und dann mit kaltem Aceton gewaschen und gefriergetrocknet. Man erhielt 58 g des Sulfatoesters.

Beispiel 2

88 g 2-(2-Hydroxyethyl)sulfonyl-5-methyl-1,4-diaminobenzol wurden analog Beispiel 1 mit 120 ml Chlorsulfonsäure umgesetzt. Nach der Aufarbeitung erhielt man 102 g des entsprechenden Sulfatoesters.

Beispel 3

95 g 2,4-Diamino-5-(2-hydroxyethylsulfonyl)benzamid wurden analog Beispiel 2 umgesetzt. Man erhielt 108 g des entsprechenden Sulfatoesters.

Beispiel 4

34 g 2-(2-Sulfatoethylsulfonyl)-5-methyl-1,4-diaminobenzol wurden in 800 g Eiswasser gelöst. Zur Lösung wurden 100 ml 5n-Salzsäure und 60 ml 5n-Natriumnitritlösung zugegeben und dann 30 Minuten bei 0 bis 5°C diazotiert. Diese Diazolösung ließ man zu einer Lösung aus 47 g Acetyl-H-Säure in 500 ml Wasser zulaufen, wobei der pH-Wert mit Natriumacetat im Bereich von 4 bis 5 gehalten wurde. Nach dem Auskuppeln über Nacht wurde abgesaugt, mit Kaliumschloridlösung gewaschen und getrocknet. Man erhielt 70 g des salzhaltigen Farbstoffs Nr. 4.

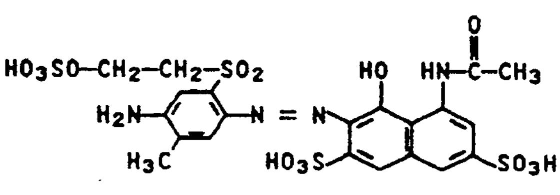

Beispiel 5

15 g des Farbstoffs Nr. 4 wurden zu einer Suspension von 6 g Cyanurchlorid in 150 ml Wasser gegeben. Bei einer Temperatur von 35 bis 40°C und einem pH-Wert von 3 bis 4 wurde 4 Stunden gerührt, von nicht umgesetztem Cyanurchlorid abfiltriert und mit 20 g Kaliumchlorid gefällt. Nach dem Absaugen und Trocknen erhielt man 22 g des salzhaltigen Farbstoffs Nr. 5

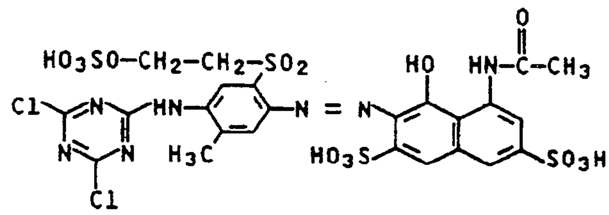

Beispiel 6

Man setzte analog Beispiel 5 den Farbstoff Nr. 4 mit 7 g Tetrachlorpyrimidin um und erhielt 25 g des salzhaltigen Farbstoffs Nr. 6.

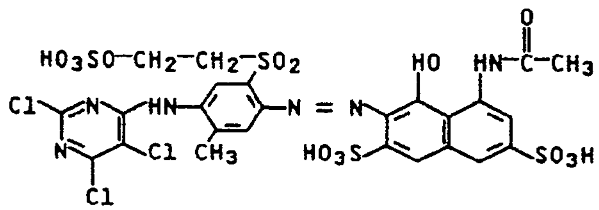

Beispiel 7

Analog Beispiel 5 wurde der Farbstoff Nr. 4 mit 10 g 2,4-Difluor-6-(N-ethyl-N-phenyl)aminotriazin umgesetzt. Man erhielt 28 g des salzhaltigen Farbstoffes der Formel :

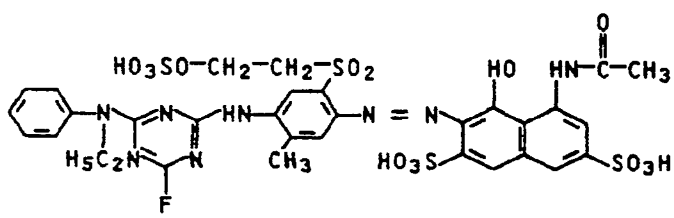

Beispiele 8-11

Wird 4-(2-Sulfatoethylsulfonyl)-1,3-diaminobenzol als Diazokomponente und Benzoyl-H-Säure als Kupplungskomponente analog Beispiel 4 umgesetzt, so erhält man nach Umsetzung der resultierenden Azoverbindung mit einer Halogen-Reaktivankergruppe folgende Farbstoffe, die blaustichige Rotfärbungen ergeben.

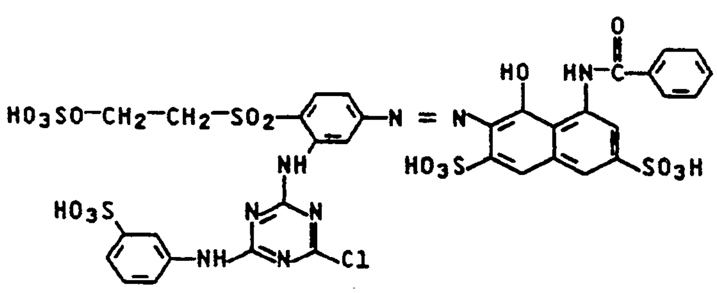

Nr. 8

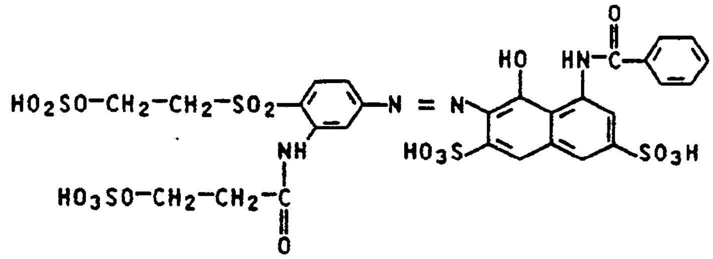

Nr. 9

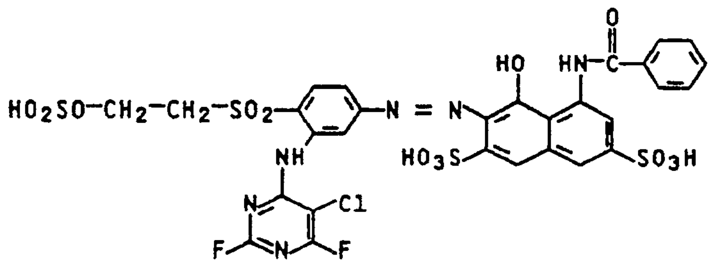

Nr. 10

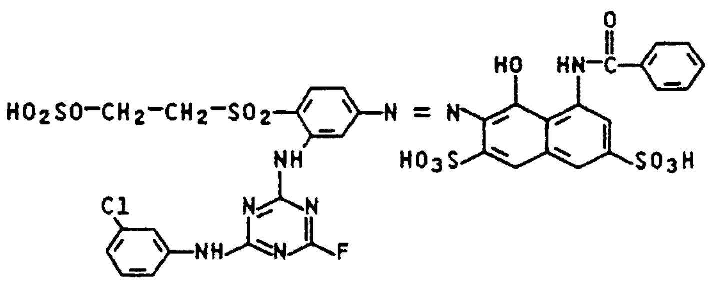

Nr. 11

Beispiel 12

54 g 3-Acetylamino-4-(2-hydroxyethylsulfonyl)anilin wurden bei 0 bis 5°C in 300 g Eiswasser und 1000 ml 5n-Salzsäure mit 65 ml 5n-Natriumnitrit innerhalb einer Stunde diazotiert. Die Lösung des Diazoniumsalzes ließ man zu einer Lösung von 105 g Benzoyl-H-Säure in 800 ml Wasser bei 5 bis 10°C zulaufen, wobei der pH-Wert mit Natriumacetat im Bereich von 3,5 bis 4,5 gehalten wurde. Nach 6 Std. Rühren bei Raumtemperatur wurden 30 g Kaliumchlorid zugegeben und der ausgefallene Farbstoff isoliert. Man erhielt 208 g des salzhaltigen Farbstoffs Nr. 12

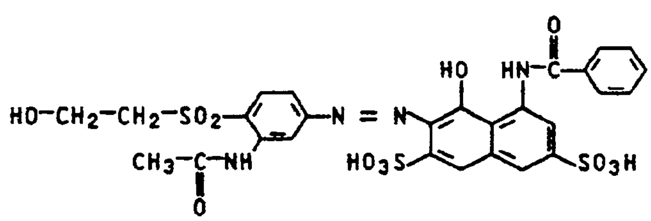

Beispiel 13

120 g des Farbstoffs Nr. 12 wurden in 200 ml Wasser und 200 ml konz. Salzsäure unter Zusatz von 10 ml Phosphorsäure (85 Gew.-%) 3 Std. bei 75 bis 80°C gerührt. Der ausgefallene Farbstoff wurde mit Alkohol gewaschen und getrocknet. Man erhielt 100 g des Farbstoffs Nr. 13

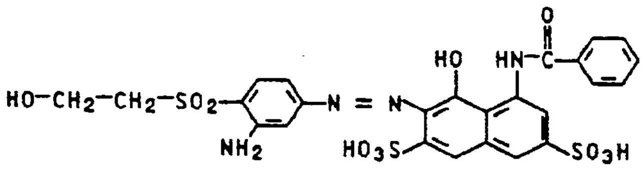

Beispiel 14

50 g des Farbstoffs Nr. 13 wurden bei 0 bis 5°C in 200 g Schwefelsäuremonohydrat eingetragen und 16 Std. bei Raumtemperatur gerührt. Anschließend ließ man die Reaktionsösung bei 0 bis 10°C in 400 ml Kaliumchloridlösung einlaufen und isolierte den ausgefallenen Farbstoff. Man erhielt 87 g des salzhaltigen Farbstoffs Nr. 14

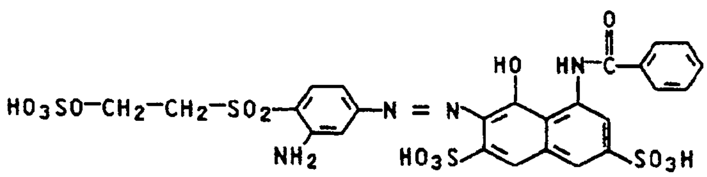

Beispiel 15

10 g des Farbstoffs Nr. 14 wurden zu einer Suspension von 13 g 2-(N-Ethyl-N-phenylamino)-4,6-difluortriazin in 150 ml Wasser gegeben und bei ansteigender Temperatur von 0 bis 35°C und einem pH-Wert von 3 bis 4, 5 8 Std. gerührt. Nach der Zugabe von 15 g Kaliumchlorid wurde abgesaugt. Man erhielt 15 g des salzhaltigen Farbstoffs Nr. 15

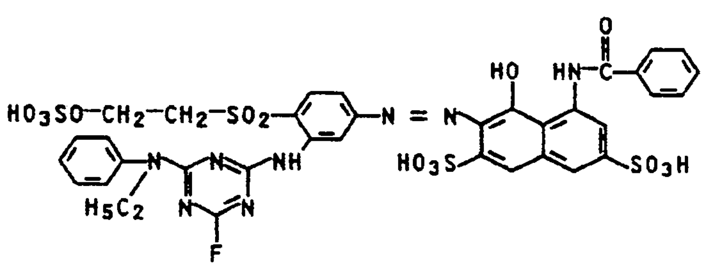

Beispiel 16

30 g der Diazokomponente der Formel :

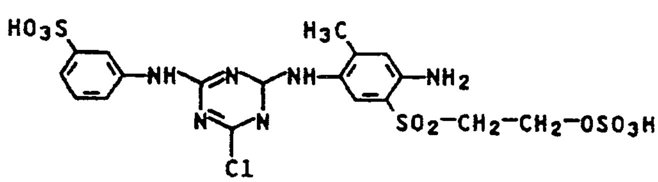

wurden bei 0 bis 5°C in 230 ml Wasser und 40 ml 5n-Salzsäure mit 35 ml 3n-Natriumnitrit diazotiert, wobei der pH-Wert im Bereich 3 bis 3,5 gehalten wurde. Diese Diazoniumlösung ließ man in eine Lösung von 27 g Benzoyl-H-Säure in 200 ml Wasser bei 0 bis 5°C und einem pH-Wert von 3,5 bis 4 einlaufen. Man ließ noch 2 Std. bei 20 bis 25°C und einem pH-Wert von etwa 4 nachrühren. Anschließend stellte man den pH-Wert auf 5,5 und gab 75 g Kaliumchlorid zu. Man erhielt 79 g des salzhaltigen Farbstoffs Nr. 16

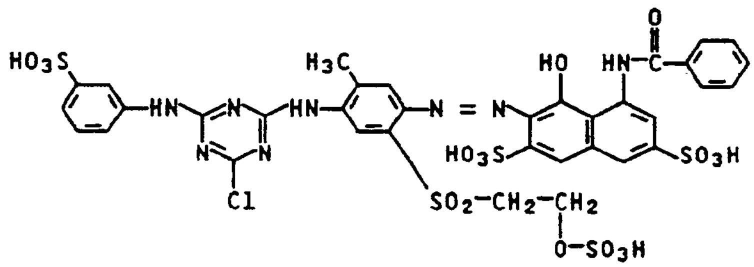

der Baumwolle im Bordoton mit hoher Fixierausbeute färbt.

Analog Beispiel 16 wurden die folgenden Farbstoffe hergestellt, die Baumwolle mit hohen Fixierausbeuten färben.

Beispiel 17-23

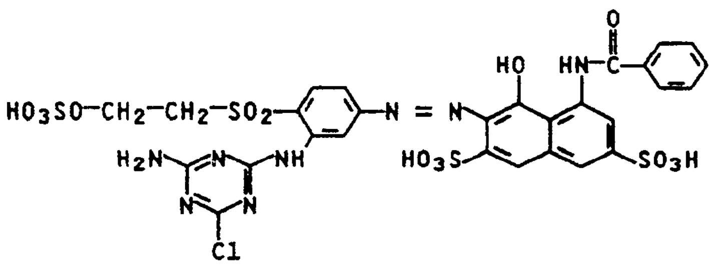

blaustichig rot

Nr. 17

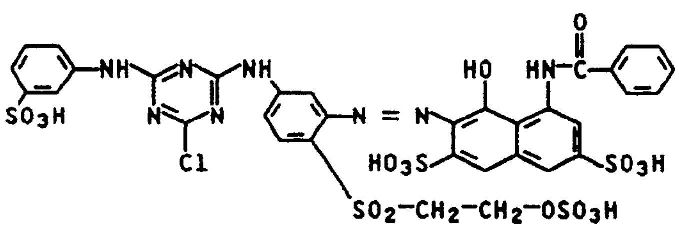

rot

Nr. 18

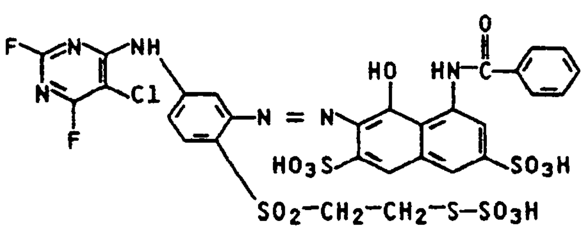

rot

Nr. 19

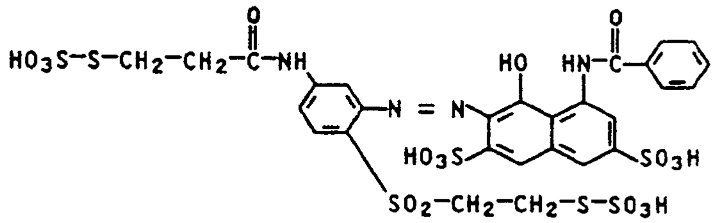

rot

Nr. 20

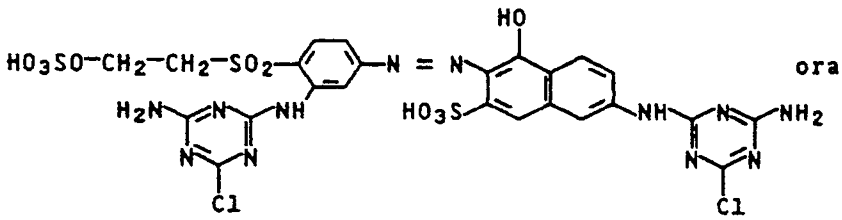

orange

Nr. 21

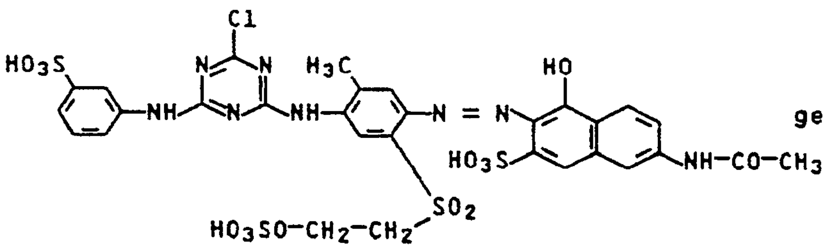

gelbstichig rot

Nr. 22

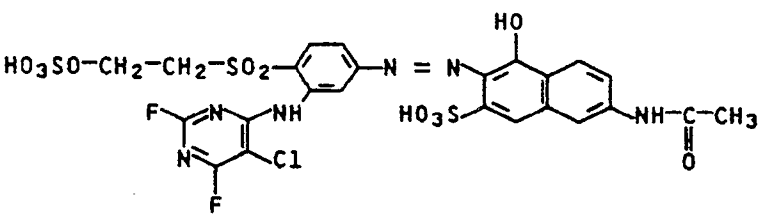

orange

Nr. 23

Beispiel 24

90 g des Mono-Natriumsalzes der Diazokomponente der Formel :

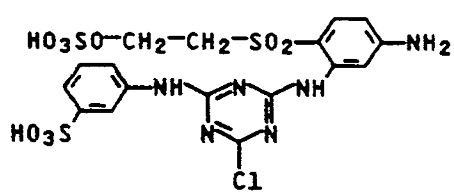

wurden in 400 g Eiswasser und 100 ml 5-Salzsäure bei 0 bis 5°C, mit 71 ml 3n-Natriumnitritlösung diazotiert. Nach 30 Minuten Rühren entfernte man den Nitritüberschub mit Amidosulfonsäure. Zu dieser Suspension ließ man innerhalb von 30 Minuten eine neutrale Lösung von 50 g H-Säure in 250 ml Wasser laufen und stellte dann den pH-Wert mit Kaliumhydrogencarbonat auf etwa 2,0. Nach zwei Stunden erhöhte man den pH-Wert auf 5,5 bis 6,5. Dabei ließ man 450 ml einer Lösung von 48 g diazotierter 2-Aminonaphthalin-1,5- disulfonsäure in 400 ml Wasser einlaufen. Als der pH-Wert konstant blieb, wurde die Reaktionslösung klärfiltriert und sprühgetrocknet. Man erhielt 200 g des salzhaltigen Farbstoffs Nr. 24

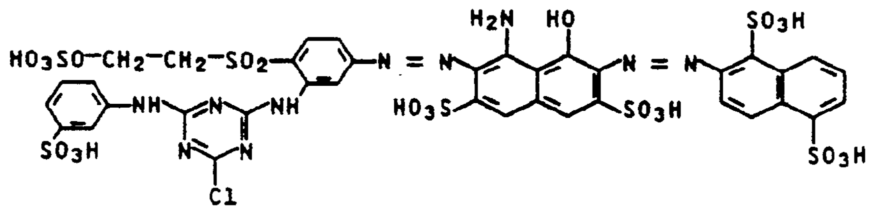

der Baumwolle in marine-blauen bis schwarzen Tönen anfärbt.

Analog Beispiel 24 erhält man mit entsprechenden Diazokomponenten folgende Farbstoffe :

Beispiele 25-27

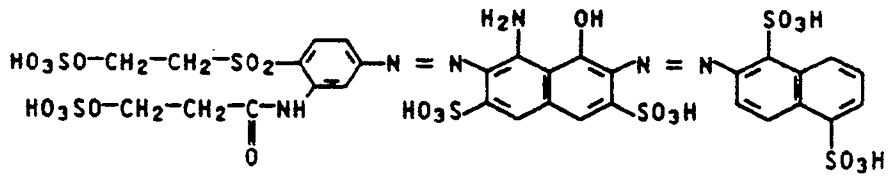

Nr. 25

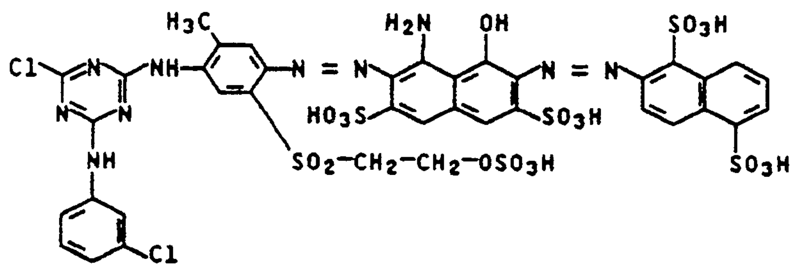

Nr. 26

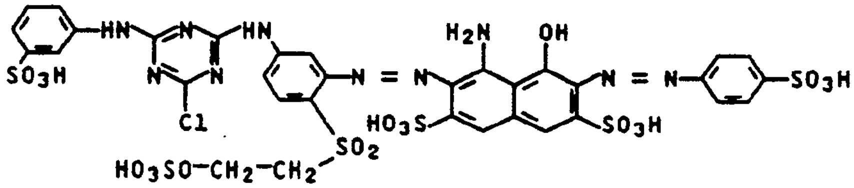

Nr. 27

## Ansprüche

1. Azoreaktivfarbstoffe der Formel I

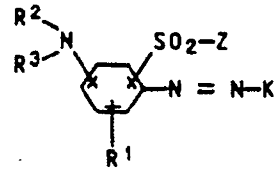

(I),

in der

K den Rest einer Kupplungskomponente,

$R^1$ Wasserstoff, $C_1$-$C_4$-Alkyl, $C_1$-$C_4$-Alkoxy, Halogen, Carboxyl, $C_1$-$C_4$-Alkoxycarbonyl, Carbamoyl, $C_1$-$C_4$-

Mono- oder Dialkylcarbamoyl oder Hydroxysulfonyl,

Z Vinyl oder den Rest $CH_2$-$CH_2$-$Z^1$, in dem $Z^1$ für $OSO_3H$, $SSO_3H$, $OPO(OH)_2$, Formyloxy, Acetyloxy oder den Rest

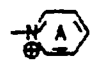 $An^{\ominus}$

steht, wobei der Ring A gegebenenfalls durch Carboxyl oder Carbamoyl substituiert ist und $An^{\ominus}$ die Bedeutung eines Anions besitzt,

$R^2$ Wasserstoff oder $C_1$-$C_4$-Alkyl, das gegebenenfalls durch Phenyl substituiert ist, und

$R^3$ gegebenenfalls durch Carboxyl substituiertes $C_2$-$C_3$-Alkenylcarbonyl, jeweils durch Halogen, $C_1$-$C_4$-Alkylsulfonyl oder Phenylsulfonyl substituiertes $C_2$-$C_3$-Alkenylcarbonyl oder Propionyl, den Rest CO-$CH_2$-$CH_2$-$Z^1$, wobei $Z^1$ die obengenannte Bedeutung besitzt, oder eine Reaktivankergruppe aus der Reihe der aromatischen Stickstoffheterocyclen, die mindestens einen reaktiven Substituenten aufweisen, bedeuten, mit der Maßgabe, daß der Rest $SO_2$-Z nicht in meta-Position zur Azobrücke steht.

2. Azoreaktivfarbstoffe gemäß Anspruch 1, die der Formel II entsprechen

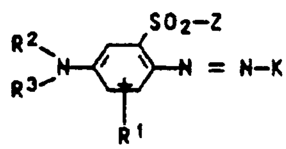 (II),

in der K, $R^1$, $R^2$, $R^3$ und Z jeweils die in Anspruch 1 genannte Bedeutung besitzen.

3. Azoreaktivfarbstoffe gemäß Anspruch 1, die der Formel III entsprechen

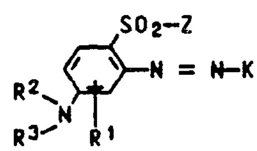 (III),

in der K, $R^1$, $R^2$, $R^3$ und Z jeweils die in Anspruch 1 genannte Bedeutung besitzen.

4. Azoreaktivfarbstoffe gemäß Anspruch 1, die der Formel IV entsprechen

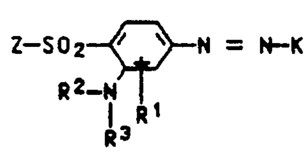 (IV),

in der K, $R^1$, $R^2$, $R^3$ und Z jeweils die in Anspruch 1 genannte Bedeutung besitzen.

5. Azoreaktivfarbstoffe gemäß Anspruch 1, dadurch gekennzeichnet, daß $R^2$ Wasserstoff oder $C_1$-$C_4$-Alkyl und $R^3$ Monofluortriazinyl, Monochlortriazinyl oder Dichlortriazinyl, das jeweils durch Phenyl, Naphthyl, Amino, $C_1$-$C_4$-Mono- oder Dialkylamino, Phenylamino oder Naphthylamino, wobei die Phenyl-, Naphthyl- und $C_1$-$C_4$-Alkylgruppen jeweils substituiert sein können, substituiert ist, Difluorpyrimidinyl, Trifluorpyrimidinyl, Trichlorpyrimidinyl, Acryloyl oder 3-Sulfatopropionyl bedeuten.

6. Verwendung der Azoreaktivfarbstoffe gemäß Anspruch 1 zum Färben und Bedrucken von Fasermaterialien.

## Claims

1. A reaction azo dye of the formula I

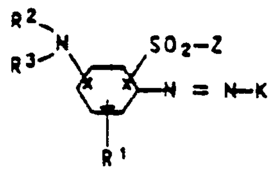

(I),

where

K is the radical of a coupling component,

R1 is hydrogen, $C_1$-$C_4$-alkyl, $C_1$-$C_4$-alkoxy, halogen, carboxyl, $C_1$-$C_4$-alkoxycarbonyl, carbamoyl, $C_1$-$C_4$-mono- or dialkyl carbamoyl or hydroxysulfonyl,

Z is vinyl or the radical $CH_2$-$CH_2$-$Z^1$ where $Z^1$ is $OSO_3H$, $SSO_3H$, $OPO(OH)_2$, formyloxy, acetyloxy or the radical

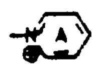

$An^{\ominus}$,

where the ring A may be substituted by carboxyl or carbamoyl and $An^{\ominus}$ is an anion,

$R^2$ is hydrogen or $C_1$-$C_4$-alkyl which may be substituted by phenyl, and

$R^3$ is unsubstituted or carboxyl-substituted $C_2$-$C_3$-alkenylcarbonyl, halogen-, $C_1$-$C_4$-alkylsulfonyl- or phenylsulfonyl-substituted $C_2$-$C_3$-alkenylcarbonyl, halogen-, $C_1$-$C_4$-alkylsulfonyl- or phenylsulfonyl-substituted propionyl, the radical CO-$CH_2$-$CH_2$-$Z^1$, where $Z^1$ has the abovementioned meaning, or a reactive group from the series of the aromatic nitrogen heterocyclics which have one or more reactive substituents, with the proviso that the radical $SO_2$-Z is not in the meta-position relative to the azo bridge.

2. A reactive azo dye as claimed in claim 1 which conforms to the formula II

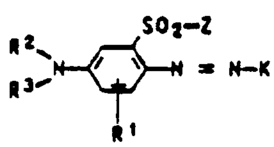

(II),

where K, $R^1$, $R^2$, $R^3$ and Z each have the meanings mentioned in claim 1.

3. A reactive azo dye as claimed in claim 1 which conforms to the formula III

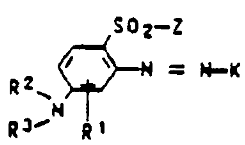

(III)

where K, $R^1$, $R^2$, $R^3$ and Z each have the meanings mentioned in claim 1.

4. A reactive azo dye as claimed in claim 1 which conforms to the formula IV

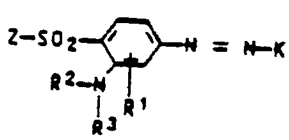

(IV),

where K, $R^1$, $R^2$, $R^3$ and Z each have the meanings mentioned in claim 1.

5. A reactive azo dye as claimed in claim 1, wherein $R^2$ is hydrogen or $C_1$-$C_4$-alkyl and $R^3$ is monofluorotriazinyl, monochlorotriazinyl or dichlorotriazinyl which are each substituted by phenyl, naphthyl, amino, $C_1$-$C_4$-mono- or dialkylamino, phenylamino or naphthylamino, where the phenyl, naphthyl and $C_1$-$C_4$-alkyl groups can each be substituted, and difluoropyriridinyl, trifluoropyrimidinyl, trichloropyrimidinyl, acryloyl or 3-sulfatopropionyl.

6. Use of a reactive azo dye as claimed in claim 1 for dyeing and printing fiber materials.

**Revendications**

1. Colorants azoïques réactifs de formule I

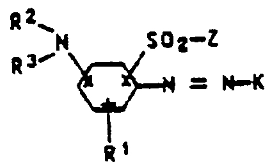 (I).

dans laquelle

K représente le reste d'un composant de copulation,

$R^1$ représente un atome d'hydrogène, un groupement alkyle en $C_1$-$C_4$, alcoxy en $C_1$-$C_4$, halogéno, carboxyle, $C_1$-$C_4$-alcoxycarbonyle, carbamoyle, $C_1$-$C_4$-mono- ou dialkylcarbamoyle ou hydroxysulfonyle,

Z représente un groupement vinyle ou le reste $CH_2$-$CH_2$-$Z^1$, où $Z^1$ est mis pour $OSO_3H$, $SSO_3H$, $OPO(OH)_2$, pour un groupement formyloxy, acétyloxy ou pour le reste

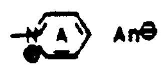 ,

le noyau A étant éventuellement substitué par un groupement carboxyle ou carbamoyle et $An^{\ominus}$ ayant la signification d'un anion,

$R^2$ représente un atome d'hydrogène ou un groupement alkyle en $C_1$-$C_4$ qui est éventuellement substitué par un reste phényle, et

$R^3$ représente un groupement $C_2$-$C_3$-alcénylcarbonyle éventuellement substitué par un reste carboxyle, un groupement $C_2$-$C_3$-alcénylcarbonyle ou propionyle substitué par un atome d'halogène ou par un reste $C_1$-$C_4$-alkylsulfonyle ou phénylsulfonyle, le reste CO-$CH_2$-$CH_2$-$Z^1$, $Z^1$ ayant les significations données précédemment, ou un radical réactif de la série des hétérocycles azotés aromatiques qui comportent au moins un substituant réactif,
étant spécifié que le reste $SO_2$-Z n'est pas en position méta par rapport au pont azoïque.

2. Colorants azoïques réactifs selon la revendication 1 qui répondent à la formule II

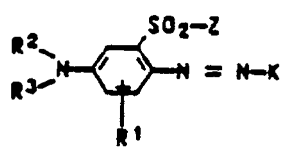 (II).

dans laquelle K, $R^1$, $R^2$, $R^3$ et Z ont respectivement les significations données dans la revendication 1.

3. Colorants azoïques réactifs selon la revendication 1 qui répondent à la formule III

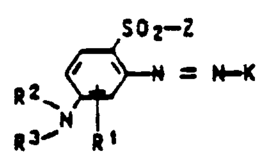 (III).

dans laquelle K, $R^1$, $R^2$, $R^3$ et Z ont respectivement les significations données dans la revendication 1.

4. Colorants azoïques réactifs selon la revendication 1 qui répondent à la formule IV

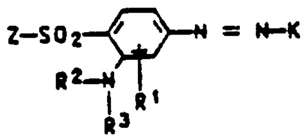

(IV).

dans laquelle K, $R^1$, $R^2$, $R^3$ et Z ont respectivement les significations données dans la revendication 1.

5. Colorants azoïques réactifs selon la revendication 1, caractérisés en ce que $R^2$ représente un atome d'hydrogène ou un groupement alkyle en $C_1$-$C_4$ et $R^3$ représente un groupement monofluorotriazinyle, monochlorotriazinyle ou dichlorotriazinyle qui est subsitué par un reste phényle, naphtyle, amino, $C_1$-$C_4$-mono- ou dialkylamino, phénylamino ou naphtylamino, chacun des restes phényle, naphtyle et $C_1$-$C_4$-alkyle pouvant être substitué, un qroupement difluoropyrimidinyle, trifluoropyrimidinyle, trichloropyrimidinyle, acryloyle ou 3-sulfatopropionyle.

6. Utilisation des colorants azoïques réactifs selon la revendication 1 pour la teinture et l'impression de matières fibreuses.